# DEMANDE DE BREVET EUROPEEN

(11) **EP 1 440 621 A1**
(43) Date de publication de la demande: **28.07.2004**
(21) Numéro de dépôt: 04290092.8
(22) Date de dépôt: 14.01.2004
(51) Int. Cl.: A23G 3/30

(54) **Chewing-gum respectant l'environnement et son procédé de fabrication**

(30) Priorité: 24.01.2003 FR 0300821
(71) Demandeur: Roquette Frères, 62136 Lestrem (FR)
(72) Inventeur: Ribadeau-Dumas, Guillaume, 59237 Verlinghem (FR); Mentink, Léon, 59100 Roubaix (FR)
(74) Mandataire: Boulinguiez, Didier

(57) **Abrégé**

L'invention a pour objet une composition de gomme base pour gomme à mâcher respectant l'environnement, caractérisée en ce qu'elle comprend un agent de gonflement choisi dans le groupe constitué par les amidons granulaires, en particulier la fécule, hydroxypropylés, éthoxylés, carboxyméthylés, éventuellement réticulés de façon complémentaire, l'amidon de blé A- séché et les amidons prégélatinisés à pouvoir désintégrant.

## Description

L'invention a pour objet un chewing-gum ou gomme à mâcher plus respectueux vis à vis de l'environnement que les chewing-gums de l'art antérieur. Plus précisément, l'invention concerne un chewing-gum moins adhérent aux surfaces que les chewing-gums classiques, pouvant ainsi facilement être décollés desdites surfaces.

Les chewing-gums se composent classiquement d'une fraction soluble et d'une fraction insoluble. La fraction soluble est généralement composée d'agents édulcorants et d'arômes. La fraction insoluble comprend une gomme de base. Pendant de nombreuses années, on a utilisé comme gomme de base des gommes naturelles insolubles dans l'eau, d'origine végétale. Ces gommes végétales étaient toutefois sujettes à des fluctuations de prix et de disponibilité importantes. Les fabricants de chewing-gums ont alors essayé de reproduire les propriétés des gommes naturelles au moyen de résines synthétiques, de caoutchouc et autres polymères.

Cette fraction insoluble ne se dissout pas dans la bouche pendant la mastication et ne peut être digérée par le consommateur qui doit donc la jeter après consommation. Malheureusement, les gommes sont le plus souvent jetées dans des endroits non destinés à cet effet, comme notamment les surfaces extérieures telles que sols en pierre, béton, trottoirs, chaussées, ou les surfaces intérieures telles que tapis, moquettes, planchers en bois, en plastique auxquelles elles adhèrent fortement. Il est donc très difficile de nettoyer ces surfaces, ce qui pose un problème environnemental conséquent.

On a alors cherché à formuler des chewing-gums présentant des propriétés d'adhérence limitées, tout en essayant de conserver le plus possible la texture élastique et non sableuse en bouche des chewing-gums classiques.

Des solutions ont alors été proposées, visant notamment à remplacer totalement les gommes de base habituelles par des produits moins collants.

Le document WO 96/20609 décrit une gomme base non collante comprenant notamment des polyvinyles acétates de poids moléculaires différents et un plastifiant non gras et non cireux. Il est dit dans ce document que les gommes non collantes développées spécialement pour ne pas adhérer aux dents et appareils dentaires adhèrent cependant toujours aux surfaces sur lesquelles elles sont jetées. De telles gommes sont aussi décrites dans les documents US 3.984.574 et EP 0 134 120.

Le document FR 2.263.710 décrit l'utilisation d'un amidon hautement et doublement modifié (acétate d'amidon hydroxypropylé) en tant que gomme base. Cet amidon présente des taux de substitution très élevés et son mode d'obtention met en oeuvre des solvants, des quantités importantes de produits alcalins et des catalyseurs qui ne sont pas recommandés pour un usage alimentaire. Le produit obtenu selon ce document se présente sous forme d'une masse mucilagineuse plus ou moins dure, ayant des propriétés élastiques tout en étant insoluble dans l'eau, à la manière d'une gomme de base classique.

Plus récemment, le document WO 01/01788 a proposé l'utilisation d'un hydrolysat de protéine de maïs pour préparer un chewing-gum ingérable et biodégradable.

D'autres solutions consistent à ne substituer qu'une partie de la gomme base traditionnelle par un composé conférant une adhérence réduite. Le document US 6.017.566 propose à cet effet d'utiliser un polyester comestible particulier et un élastomère.

Le document WO 02/17730 propose quant à lui l'utilisation de lécithine pour limiter l'adhérence de la gomme. La lécithine, qui est une matière grasse d'origine végétale, est ajoutée à hauteur de 3 à 15% en poids de la formulation de chewing-gum.

Fort du constat qu'il n'existe pas de formulation satisfaisante et cherchant à améliorer l'état de la technique, la Demanderesse s'est alors attachée à trouver une solution techniquement et économiquement viable pour préparer une gomme de base respectant mieux l'environnement à l'aide d'excipients d'origine végétale aptes à conférer une adhérence moindre de la gomme sur toutes surfaces.

Et c'est après de longs travaux de recherche que la Demanderesse a eu le mérite de trouver que ce but pouvait être atteint dès lors qu'on substitue une partie de la gomme de base traditionnelle par une sélection particulière d'amidons susceptibles de gonfler et de changer de volume en présence d'eau de manière à modifier et fragiliser les points d'adhérence de la gomme sur son support et ainsi d'en faciliter le décollement lors des opérations de nettoyage, tout en procurant une texture adaptée à la mastication, et en conservant le plus possible les propriétés habituelles conférées par une gomme base traditionnelle.

L'invention concerne donc en premier lieu une composition de gomme de base pour gomme à mâcher respectant mieux l'environnement, caractérisée en ce qu'elle comprend un agent de gonflement choisi dans le groupe constitué par les amidons granulaires, en particulier les fécules, hydroxypropylés, éthoxylés, carboxyméthylés, éventuellement réticulés de façon complémentaire, l'amidon de blé A- séché et les amidons prégélatinisés à pouvoir désintégrant.

Seuls ces agents de gonflement sont aptes à faciliter le décollement des gommes, tout en conférant une masticabilité et une texture en bouche très proche des chewing-gums traditionnels. Il a en effet été démontré par de multiples essais que les amidons natifs standards autres que l'amidon de blé A- communiquent au chewing-gum une texture sableuse, insuffisamment liée et désagréable en bouche. Ceci est également le cas avec des amidons prégélatinisés ne présentant pas ou peu de pouvoir désintégrant.

Ces agents de gonflement sont préparés selon les techniques classiques connues de l'homme du métier.

En ce qui concerne les fécules modifiées, elles sont hydroxypropylées à un degré de substitution (DS) de 0,05 à 3.

En ce qui concerne la fécule carboxyméthylée, celle-ci peut être obtenue par réaction en milieu alcalin et en phase alcool du monochloroacétate de sodium. Cette fécule est préalablement réticulée de manière à contrôler le gonflement des granules de fécule.

On entend par amidon de blé A- la fraction granulométrique la plus fine de l'amidon standard.

On entend par amidons prégélatinisés à pouvoir désintégrant notamment les compositions décrites dans le brevet EP 964.000 dont la Demanderesse est titulaire. Ces compositions consistent en un mélange d'amidon de maïs standard et d'amidon riche en amylose, ledit mélange étant prégélatinisé sur tambour sécheur. Les amidons à pouvoir désintégrant sont connus de l'homme du métier comme étant des amidons totalement ou partiellement granulaires et aptes à gonfler dans l'eau. Ces amidons sont le plus souvent utilisés dans la préparation de comprimés pharmaceutiques.

De préférence, ces agents de gonflement sont ajoutés à la composition de gomme de base dans une proportion de 1 à 50% en poids par rapport au poids total de la gomme base. De manière encore plus préférée, ladite gomme base comprend 1 à 35% et de préférence 5 à 25% en poids dudit agent de gonflement.

La composition de gomme de base conforme à l'invention convient pour la préparation de tous types de chewing-gums, qui peuvent se présenter avec ou sans sucre, sous formes de sticks, dragées, tablettes, billes pleines ou creuses, chewing-gums ou bubble gums en poudre, comprimés, bubble gums, poudre de chewing-gum pour dragéification, éventuellement dragéifiés.

L'invention concerne donc en second lieu un chewing-gum caractérisé en ce qu'il comprend ladite composition de gomme de base renfermant un agent de gonflement choisi dans le groupe constitué par les amidons granulaires, en particulier la fécule, hydroxypropylés, éthoxylés, carboxyméthylés, éventuellement réticulés de façon complémentaire, l'amidon de blé A- séché et les amidons prégélatinisés à pouvoir désintégrant.

Conformément à l'invention, la gomme de base constitutive de la fraction insoluble du chewing-gum est de préférence ordinaire et semblable à celles qui sont couramment utilisées. Elle peut représenter, selon qu'il s'agit d'une tablette à mâcher, d'un bubble-gum, d'un centre à dragéifier ou d'un chewing-gum hypocalorique, environ 10% à environ 95% de la composition conforme à l'invention. Sa nature sera adaptée au type de chewing-gum fabriqué. Elle pourra comprendre, outre ledit agent de gonflement, des élastomères synthétiques et/ou naturels comme le polyisoprène, l'acétate de polyvinyle, le polyisobutylène, des latex, des résines comme les résines terpéniques, les esters et les alcools de polyvinyle, des matières grasses ou des cires comme par exemple la lanoline, les huiles végétales partiellement hydrogénées ou non, les acides gras, les esters partiels de glycérol, la paraffine, les cires microcristallines, des agents de charge comme le talc, le carbonate de calcium, des plastifiants d'élastomères comme le triacétate de glycérol, le monostéarate de glycérol, les dérivés de colophanes, des émulsifiants comme la lécithine, les esters de sorbitol, des colorants ou des agents de blanchiment, des antioxydants, des agents anticollants comme le mannitol.

De préférence, la teneur en gomme de base de la gomme à mâcher conforme à l'invention est comprise entre 15 et 60% en poids. Selon une variante préférée, elle est comprise entre 20 et 40% en poids.

La gomme de base peut être préparée selon les techniques classiques, et notamment par mélange à chaud des ingrédients à l'aide d'un mélangeur. On peut également avoir recours aux techniques de production en continu, à l'aide d'extrudeuses. Les ingrédients sont alors mélangés de façon homogène, puis le mélange est extrudé, laminé ou découpé selon la forme finale voulue. Certains ingrédients peuvent être ajoutés en cours d'extrusion, à différents points d'alimentation de l'extrudeuse.

En ce qui concerne la fraction hydrosoluble du chewing-gum, celle-ci comprend généralement des édulcorants et un agent aromatisant.

L'agent aromatisant peut comprendre des composés naturels et/ou de synthèse. Il peut s'agir en particulier d'arômes de menthe, d'orange, de citron, et autres fruits ou plantes tels que par exemple les arômes de pomme, de fraise, de banane, de cerise ou de mélanges de fruits.

L'agent aromatisant est employé en une quantité appropriée aisément déterminable par l'homme du métier, en considérant la nature de la gomme de base, la quantité de gomme de base, le type de gomme à mâcher et les caractéristiques de cet agent aromatisant. D'ordinaire, il sera employé à un taux compris entre environ 0.2% et environ 3%. De préférence, on retiendra, notamment pour les agents aromatisants hydrophobes, des quantités suffisantes pour plastifier la gomme de base sans que le ramollissement de celle-ci soit excessif. Pour cela, on retiendra plutôt une teneur en agent aromatisant comprise entre 0.5% et 1.8%. On peut également utiliser un mélange d'arômes hydrophobes et d'arômes hydrophiles à raison d'environ 2% de chaque arôme. Le dosage en agent aromatisant dépendra également de la richesse de celui-ci en composés d'arômes, et de sa nature physique. Par exemple, pour une forme encapsulée, le dosage sera d'ordinaire plus faible.

Les édulcorants représentent environ 5 à 90% et de préférence 40 à 85% de la composition de chewing-gum. Ils sont incorporés sous forme sèche ou liquide. On peut utiliser, selon que l'on prépare un chewing-gum avec ou sans sucre, des sucres tels que le dextrose, le saccharose, le maltose, le fructose, le tréhalose, le maltose, le lactose ou des sirops de glucose, fructose, des dextrines, seuls ou en mélange entre eux, ou des polyols comme le maltitol, le sorbitol, le mannitol, le xylitol, le lactitol, l'érythritol, l'isomalt, le maltotriitol, l'iditol, les hydrolysats d'amidon hydrogénés, seuls ou en mélange. On peut également avoir recours à des édulcorants intenses, sous forme libre ou encapsulée tels que notamment l'aspartame, l'acésulfame-K, la saccharine, le sucralose. Ces édulcorants intenses représentent environ 0.02 à 0.1% en poids du chewing-gum.

On peut également ajouter des plastifiants de manière à optimiser la texture finale de la gomme. Ces plastifiants peuvent être choisis par exemple parmi le sorbitol, les hydrolysats d'amidon hydrogénés, la glycérine.

Des arômes, des colorants, des actifs pharmaceutiques, des acides organiques, des vitamines et minéraux peuvent également être ajoutés.

Selon un mode de réalisation particulier, le chewing-gum conforme à l'invention comprend, en poids par rapport à sa matière sèche totale :
a) de 15 à 50% de gomme de base
b) de 1 à 15% d'agent de gonflement
c) de 0, 5 à 80% d'au moins un polyol cristallisé
d) de 0 à 10% d'un sirop de maltitol
e) de 0 à 10% d'un agent plastifiant

L'invention a en outre pour objet un procédé de préparation d'un chewing-gum selon l'invention, caractérisé en ce qu'on incorpore à la gomme de base pendant ou après sa fabrication, un agent de gonflement choisi dans le groupe constitué par les amidons granulaires, en particulier la fécule hydroxypropylés, éthoxylés et éventuellement réticulés de façon complémentaire, carboxyméthylés, l'amidon de blé A-séché et les amidons prégélatinisés à haut pouvoir désintégrant.

Pour préparer le chewing-gum selon l'invention, on peut mettre en oeuvre toute technique connue de l'homme du métier. Dans la pratique, on mélange les ingrédients de manière séquentielle dans un pétrin malaxeur muni d'un système de chauffage. On incorpore généralement les ingrédients liquides en premier lieu, puis les ingrédients solides. Lorsque les ingrédients sont homogénéisés, le mélange obtenu est alors déchargé et mis en forme par laminage, extrusion, découpage ou moulage.

L'agent de gonflement conforme à l'invention est incorporé à la composition de gomme de base de préférence avant ajout des autres ingrédients.

Il est ajouté à la composition de gomme de base dans une proportion de 1 à 50% en poids par rapport au poids total de la gomme base. De manière encore plus préférée, ladite gomme base comprend 1 à 35% et mieux 5 à 25% en poids dudit agent de gonflement.

En utilisant des ingrédients de gommes de base adaptés, on peut également préparer des chewing-gums selon l'invention sous forme de poudre, en tubes, en comprimés.

Les chewing-gums conformes à l'invention peuvent consister en centres à dragéifier. Dans ce cas, on pourra se référer aux méthodes connues de l'homme du métier, à l'aide de sucres ou de polyols. On peut par exemple mettre en oeuvre les procédés de dragéification sans sucre décrits dans les brevets EP 201.412 B1, EP 625.311 B1, EP 774.201 B1 dont la Demanderesse est titulaire.

L'invention sera mieux comprise à la lecture des exemples qui suivent, qui se veulent uniquement illustratifs et non limitatifs.

### Exemple 1 : formulation d'un chewing-gum selon l'invention.

On prépare deux compositions de chewing-gum selon la formule ci-après, la composition selon l'invention correspondant à une substitution de 20% de la gomme base par un agent de gonflement.

### 1.1 : formule

| | TEMOIN | Composition selon l'invention |
|---|---|---|
| Gomme de base (Valencia T - CAFOSA) | 30.0 % | 24.0% |
| Agent de gonflement | - | 6.0% |
| Sorbitol poudre NEOSORB® P60W | 45.0% | 45.0% |
| Xylitol poudre XYLISORB® 90 | 10.0% | 10.0% |
| Mannitol 60 | 5.0% | 5.0% |
| Sirop de maltitol LYCASIN® 80/55 HDS | 7.8% | 7.8% |
| Arôme menthe poudre SILESIA | 0.4% | 0.4% |
| Arôme menthe liquide SILESIA | 1.8% | 1.8% |

### 1.2 Mode opératoire

- introduire la gomme de base à 50°C et l'agent de gonflement dans un pétrin préchauffé à 50°C. Ajouter la moitié du sorbitol poudre, et le sirop de maltitol. Malaxer pendant 2 minutes.
- Ajouter le mannitol 60, malaxer 2 minutes.
- Ajouter le xylitol poudre, malaxer 1 minute.
- Ajouter l'autre moitié du sorbitol poudre, malaxer 2 minutes.
- Ajouter l'arôme en poudre, malaxer 1 minute.
- Ajouter l'arôme liquide, malaxer 1 minute.
- Décharger le pétrin, laminer en sticks de 5 mm d'épaisseur et découper.

### 1.3 Agents de gonflement testés.

Différents amidons modifiés ou non sont testés en substitution de 20 % de la gomme de base du témoin :
- 1 : fécule hydroxypropylée de DS 1,4
- 2 : fécule hydroxypropylée de DS 0,18 réticulée avec 50 ppm de POCl₃ commercialisée par la Demanderesse sous l'appellation LAB 2552.
- 3 : fécule carboxyméthylée commercialisée par la Demanderesse sous l'appellation GLYCOLYS®D,
- 4 : amidon de blé hydroxypropylé de DS 0,18 et réticulé commercialisé par la Demanderesse sous l'appellation LAB 2334, prégélatinisé par atomisation,
- 5 : LAB 2334 prégélatinisé sur tambour,
- 6 : amidon à haut pouvoir désintégrant commercialisé par la Demanderesse sous l'appellation LYCATAB®C et préparé conformément au brevet EP 964.000.
- 7 : amidon de blé A- séché

### 1.4. Mesure de la dureté des sticks

On mesure au moyen de l'appareil INSTRON la dureté exprimée en Newtons des sticks préparés.

Les résultats sont donnés dans le tableau ci-après :

| | J0-45°C | J0-35°C | J0-20°C | J1-20°C 50%HR | J8-20°C 50%HR | J15-20°C 50%HR | J30-20°C 50%HR |
|---|---|---|---|---|---|---|---|
| TEMOIN | 1.2 | 3.2 | 11.8 | 15.7 | 16.1 | 19.9 | 28.4 |
| 1 | 2.1 | 4.7 | 16 | 25.7 | 28.6 | 29.3 | |
| 2 | 1.6 | 3.6 | 13 | 16.5 | 22.9 | 24.8 | |
| 3 | | | | 25.4 | | | 28.3 |
| 4 | 2.1 | 5.7 | 21.9 | 29.4 | 33 | 33.8 | |
| 5 | 1.7 | 4.6 | 17.1 | 22.9 | 27.8 | 27.3 | |
| 6 | 1.6 | 4 | 16.6 | 21.2 | 27.2 | 28 | |
| 7 | | | | 33.9 | | | 48.8 |

D'une manière générale, les chewing-gums dans lesquels 20% de la gomme base est substituée par un amidon modifié sont plus durs que le témoin. Ceux dont la texture INSTRON est la plus proche du témoin sont ceux préparés avec la fécule LAB 2552.

### 2. Dégustation des chewing-gums.

La perception en bouche des chewing-gums dans lesquels 20% de la gomme de base a été substituée est comparée à celle des chewing-gums témoins :
- les chewing-gums (1,2,3) comprenant de la fécule modifiée ou (6) un amidon prégel désintégrant ont des textures en bouche comparables à celles des chewing-gums témoins, sont légèrement plus durs et ne présentent pas d'arrière-goût.
- Le chewing-gum comprenant l'amidon de blé A- présente une texture satisfaisante, une bonne cohésion, mais un léger arrière-goût.
- Les chewing-gums 4 et 5 comprenant de l'amidon de blé modifié ont une mâche différente et sont moins bien liés en bouche que le témoin. Le chewing-gum 4 présente un léger arrière goût.

### 3. Absorption d'eau par les chewing-gums selon l'invention.

Les chewing-gums précédemment fabriqués sont immergés dans de l'eau distillée afin d'évaluer leur pouvoir d'absorption d'eau. L'évolution du poids des sticks a été mesurée au cours du temps après séchage au papier de l'eau de surface.

Les résultats sont reportés dans le tableau ci-après :

| | **Témoin** | **1** | **2** | **4** | **5** | **6** |
|---|---|---|---|---|---|---|
| **Après 0 jour** | 0 | 0 | 0 | 0 | 0 | 0 |
| **Après 1 jour** | 5.3 | 27.1 | 5.6 | 25.4 | 45.7 | 11.5 |
| **Après 2 jours** | 8.6 | 30.8 | 7.5 | 46.2 | 61 | 19.5 |
| **Après 4 jours** | 12.1 | 36.7 | 17.2 | 52.5 | 66.8 | 26.1 |
| **Après 7 jours** | 15.3 | 39.4 | 23.6 | 53.4 | 69.3 | 30 |
| **Après 10 jours** | 24 | 41.5 | 27.2 | 54.6 | 71 | 30.8 |
| *(% d'eau absorbée par les chewing-gums immergés)* | | | | | | |

Les chewing-gums 4 et 5 préparés à partir absorbent plus rapidement de l'eau et plus d'eau que le témoin.

Le chewing-gum 1 absorbe un peu plus d'eau que le témoin.

Le chewing-gum 2 est comparable au témoin.

### 4. Evaluation du caractère collant des chewing-gums.

On procède à l'évaluation du caractère collant des gommes conformes à l'invention selon le test suivant :
- 5 grammes de chewing-gum sont mastiqués pendant 5 minutes
- la gomme est ensuite collée sur un support en béton, puis décollée manuellement du support
- on évalue visuellement le décollement des gommes : de facile (+++++) à très difficile (+)
Les résultats figurent dans le tableau ci-après :

| Témoin (Valencia T) | + |
|---|---|
| 5 | ++ |
| 4 | ++ |
| 7 | ++ |
| 6 | +++ |
| 3 | +++ |
| 2 | +++ |
| 1 | ++++ |

Ces résultats démontrent que les chewing-gums (1,2,3,6) comprenant de la fécule hydroxypropylée, de la fécule hydroxypropylée réticulée, de la fécule carboxyméthylée et de l'amidon prégélatinisé désintégrant sont facilement décollables de leur support. Les chewing-gums 4 et 5 sont moins facilement décollables, mais restent supérieurs au témoin.

Les meilleurs résultats sont obtenus avec la fécule hydroxypropylée en phase éthanol.

Conclusion : les substitutions de 20% de gomme de base par une fécule hydroxypropylée en phase éthanol, par un amidon prégel désintégrant ou par une fécule réticulée hydroxypropylée permettent d'atteindre les objectifs de la présente invention : pas de modification majeure de la texture ou du goût des chewing-gums et réduction du caractère collant. Au contact de l'eau, les chewing-gums selon l'invention absorbent plus d'eau que le témoin, ce qui traduit leur facilité de décollement.

## Revendications

1. Composition de gomme base pour gomme à mâcher respectant l'environnement, **caractérisée en ce qu'**elle comprend un agent de gonflement choisi dans le groupe constitué par les amidons granulaires, en particulier la fécule, hydroxypropylés, éthoxylés, carboxyméthylés, éventuellement réticulés de façon complémentaire, l'amidon de blé A- séché et les amidons prégélatinisés à pouvoir désintégrant.

2. Composition de gomme base selon la revendication 1, **caractérisée en ce que** l'agent de gonflement représente de 1 à 50% en poids du poids total de la gomme base.

3. Composition de gomme base selon l'une ou l'autre des revendications 1 et 2, **caractérisée en ce que** la gomme base comprend de 1 à 35%, de préférence de 5 à 25% en poids dudit agent de gonflement.

4. Chewing-gum **caractérisé en ce qu'**il comprend une composition de gomme base selon les revendications 1 à 3.

5. Chewing-gum selon la revendication 4 **caractérisé en ce qu'**il comprend de 15 à 60% en poids de ladite gomme base.

6. Chewing-gum selon l'une ou l'autre des revendications 4 et 5, **caractérisé en ce qu'**il comprend de 20 à 40% en poids de ladite gomme base.

7. Chewing-gum respectant l'environnement **caractérisé en ce qu'**il comprend, en poids par rapport à sa matière sèche totale :
- de 15 à 50% de gomme base
- de 1 à 15% d'un agent de gonflement
- de 0,5 à 80% d'au moins un polyol cristallisé
- de 0 à 10% d'un sirop de maltitol
- de 0 à 10% d'un agent plastifiant,
ledit agent de gonflement étant choisi dans le groupe constitué par les amidons granulaires, en particulier la fécule, hydroxypropylés, éthoxylés, carboxyméthylés, éventuellement réticulés de façon complémentaire, l'amidon de blé A- séché et les amidons prégélatinisés à pouvoir désintégrant.

8. Procédé de préparation d'un chewing-gum respectant l'environnement, **caractérisé en ce qu'**on incorpore à la gomme de base un agent de gonflement choisi dans le groupe constitué par les amidons granulaires, en particulier la fécule, hydroxypropylés, éthoxylés, carboxyméthylés, l'amidon de blé A- séché et les amidons prégélatinisés à pouvoir désintégrant.

9. Procédé selon la revendication 8, **caractérisé en ce qu'**on incorpore à la gomme de base 1 à 50% dudit agent de gonflement en poids par rapport au poids total de la gomme base.
